# EUROPÄISCHE PATENTSCHRIFT

(11) **EP 1 547 235 B1**
(45) Veröffentlichungstag und Bekanntmachung des Hinweises auf die Patenterteilung: **15.08.2012**
(21) Anmeldenummer: 03807827.5
(22) Anmeldetag: 29.09.2003
(51) Int. Cl.: H02P 25/02

(54) **SCHALTUNGSANORDNUNG ZUR ANSTEUERUNG EINES OSZILLIERENDEN ELEKTROMOTORS**
CIRCUIT ARRANGEMENT FOR CONTROLLING AN OSCILLATING ELECTRIC MOTOR
CIRCUIT DESTINE A LA COMMANDE D'UN MOTEUR ELECTRIQUE OSCILLANT

(30) Priorität: 05.10.2002 DE 10246520
(43) Veröffentlichungstag der Anmeldung: 29.06.2005
(73) Patentinhaber: Braun GmbH, 61476 Kronberg (DE)
(72) Erfinder: KLEMM, Torsten, 65812 Bad Soden (DE); KRAUS, Bernhard, 35619 Braunfels (DE)
(86) Internationale Anmeldenummer: PCT/EP2003/010790
(87) Internationale Veröffentlichungsnummer: WO 2004/034561

(56) Entgegenhaltungen:
- EP-A2- 1 231 706
- US-A- 5 675 699
- US-A- 6 013 994
- MIKE MCDERMOTT: "Low loss motor driver" RESEARCH DISCLOSURE, KENNETH MASON PUBLICATIONS, HAMPSHIRE, GB, Bd. 342, Nr. 9, Oktober 1992 (1992-10), XP007118166 ISSN: 0374-4353
- BROWN S: "SMART H-BRIDGE DRIVER FOR STEPPER AND DC BRUSHED MOTORS" ELECTRONIC ENGINEERING, MORGAN-GRAMPIAN LTD. LONDON, GB, Bd. 66, Nr. 814, 1. Oktober 1994 (1994-10-01), Seiten 51-52,54, XP000471390 ISSN: 0013-4902

## Beschreibung

Die Erfindung betrifft ein elektrisches Kleingerät mit einem oszillierenden Elektromotor und einer Schaltungsanordnung zur Ansteuerung des oszillierenden Elektromotors. Weiterhin betrifft die Erfindung ein Verfahren zum Ansteuern eines oszillierenden Elektromotors der kontinuierlich seine Laufrichtung ändert das mit einer derartigen Schaltungsanordnung ausgeführt werden kann.

Es ist bereits eine Vielzahl von Schaltungsanordnungen zur Ansteuerung von Elektromotoren bekannt. Die jeweilige Ausbildung der Schaltungsanordnung hängt in der Regel von der Art des Elektromotors und den Anforderungen der Anwendung ab, bei der der Elektromotor eingesetzt wird. Bei Anwendungsfällen, bei denen die Laufrichtung des Elektromotors fortwährend umgekehrt werden soll, wird häufig eine Vollbrückenschaltung zur Ansteuerung des Elektromotors eingesetzt. Mit der Vollbrückenschaltung kann die Betriebsspannung des Elektromotors fortwährend umgepolt werden, indem zwei Anschlüsse des Elektromotors zum Anlegen der Betriebsspannung abwechselnd direkt und über Kreuz mit zwei Polen einer Gleichspannungsquelle verbunden werden. Zur Realisierung einer derartigen Vollbrückenschaltung ist es weiterhin bekannt, vier Transistoren einzusetzen, die jeweils im durchgesteuerten Zustand einen Stromfluß in eine Richtung zulassen. Dabei ist je ein Transistor zwischen jedem der beiden Anschlüsse des Elektromotors und zwischen jedem der beiden Pole der Gleichspannungsquelle geschaltet. Antiparallel zu den Transistoren ist zum Schutz vor Überspannungen jeweils eine Diode geschaltet, die permanent einen Stromfluß in einer zum zugehörigen Transistor entgegengesetzten Richtung zuläßt. Die Transistoren können einzeln durchgesteuert werden und dadurch die jeweils gewünschten Verbindungen zwischen den Anschlüssen des Elektromotors und den Polen der Gleichspannungsquelle hergestellt werden. Die im Elektromotor induzierte Spannung kann je nach Ansteuerung der Transistoren zu einen Stromfluß durch eine oder mehrere Dioden führen, wobei eine nicht unerhebliche Verlustleistung entsteht. Diese Verlustleistung wirkt sich nachteilig aus, da zum einen relativ leistungsstarke Dioden eingesetzt werden müssen und zum anderen dem System Energie entzogen wird und somit der Wirkungsgrad sinkt. Letzteres kann insbesondere bei Anwendungsfällen, bei denen die Gleichspannungsquelle als Akku oder Batterie ausgebildet ist, zu Problemen führen.

Die EP 1 231 706 A2 beschreibt eine Steuervorrichtung zum Steuern eines linear schwingenden Motors und eine Steuereinrichtung, die dazu ausgelegt ist, einer Wicklung des Elektromagneten des Motors intermittierend elektrische Energie zuzuführen, um ein bewegliches Element des Motors hin und her zu bewegen. Die Steuervorrichtung weist vier Schaltstromkreise auf, die jeweils einen Schalter und eine parallel dazu angeordnete Diode zur Vermeidung von reversen Strömen aufweisen. Die Steuervorrichtung ist dazu ausgelegt, in einer ersten zeitdauer zwei Schaltstromkreise ON zu schalten, sodass Strom von einer Spannungsquelle durch die Schalter und den Motor fließt und in einer zweiten Zeitdauer einen der ON-geschalteten Schalter OFF zu schalten, sodass ein Strom aus dem Motor über den ON-geschalteten Schalter und die Diode des OFF-geschalteten Schalters fließt.

Das Dokument Mike McDermott: ,,Low loss motor driver" Research Disclosure, Kenneth mason Publications, Hampshire, GB, Bd. 342, Nr. 2, Oktober 1992 (1992-10), XP007118166 ISSN: 0374-4353 beschreibt einen Schaltkreis zur Ansteuerung einer induktiven Last, bei der in einer Rezirkulationsphase des Stromes aus der induktiven Last zwei MOSFET-Schalter leitend geschaltet sind, solange noch ein Strom fließt, um einen Niedrigverlustpfad für den Strom zur Verfügung zu stellen.

Der Erfindung liegt die Aufgabe zugrunde, eine möglichst optimale Ansteuerung eines oszillierenden Elektromotors zu ermöglichen und insbesondere einen möglichst hohen Wirkungsgrad zu erzielen.

Diese Aufgabe wird durch ein elektrisches Kleingerät mit der Merkmalskombination des Anspruchs 1 gelöst und durch ein Verfahren mit der Merkmalskombination des Anspruchs 3.

Die erfindungsgemäße Schaltungsanordnung zur Ansteuerung eines oszillierenden Elektromotors eines elektrischen Kleingeräts, das mit einer als Akku oder als Batterie ausgebildeten Spannungsquelle betrieben wird, weist vier Schaltelemente auf, die jeweils in einem durchgesteuerten Zustand einen Stromfluß zulassen und in einem gesperrten Zustand den Stromfluß sperren. Die Schaltelemente sind in einer Vollbrückenschaltung angeordnet, gemäß der je ein Schaltelement zwischen einem ersten Pol der Spannungsquelle und einem ersten Anschluß des Elektromotors, zwischen dem ersten Pol der Spannungsquelle und einem zweiten Anschluß des Elektromotors, zwischen einem zweiten Pol der Spannungsquelle und dem ersten Anschluß des Elektromotors sowie zwischen dem zweiten Pol der Spannungsquelle und dem zweiten Anschluß des Elektromotors geschaltet sind. Alle vier Schaltelemente lassen im durchgeschalteten Zustand für beide Stromrichtungen gleichermaßen einen Stromfluß zu. Die erfindungsgemäße Schaltungsanordnung hat den Vorteil, daß der damit angesteuerte Elektromotor mit einem hohen Wirkungsgrad betrieben werden kann. Dadurch läßt sich eine längere Laufzeit mit einer Batterie bzw. mit einer Akkuladung erreichen oder es kann bei gleicher Laufzeit eine Batterie oder ein Akku mit einer geringeren Kapazität eingesetzt werden und somit Gewicht, Bauraum und Kosten reduziert werden.

Jedem Schaltelement ist eine Diode parallel geschaltet , wobei die Dioden bezüglich der Spannungsquelle jeweils in Sperrichtung angeordnet sind. Die Schaltelemente sind jeweils bevorzugt als Feldeffekttransistoren ausgebildet.

Beim erfindungsgemäßen Verfahren zum Ansteuern eines oszillierenden Elektromotors eines elektrischen Kleingeräts, das mit einer als Akku oder als Batterie ausgebildeten Spannungsquelle betrieben wird, wird der Elektromotor in einer ersten Betriebsphase mit der Spannungsquelle verbunden und dadurch in einer ersten Laufrichtung angetrieben. In einer zweiten Betriebsphase wird der Elektromotor von der Spannungsquelle abgeklemmt. In der zweiten Betriebsphase werden zwei Schaltelemente durchgesteuert, von denen wenigstens eines im durchgesteuerten Zustand in beide Stromrichtungen gleichermaßen einen Stromfluß zuläßt. Dadurch werden Anschlüsse des Elektromotors, die in der ersten Betriebsphase mit der Spannungsquelle verbunden waren, miteinander verbunden, so daß der Elektromotor in der ersten Laufrichtung angetrieben wird. Während der zweiten Betriebsphase wird der Spannungsquelle somit keine Leistung entnommen. Durch den Einsatz wenigstens eines im Bezug auf den Stromfluß symmetrischen Schaltelements, wird zudem erreicht, daß während der zweiten Betriebsphase kein nennenswerter Spannungsabfall an den Schaltelementen erfolgt und so die Verlustleistung gering gehalten werden kann. Dies hat wiederum den Vorteil, daß über einen relativ langen Zeitraum ohne Zutun der Spannungsquelle ein relativ hoher Stromfluß aufrecht erhalten werden kann. Im Sinne eines möglichst hohen Wirkungsgrads wird die zweite Betriebsphase daher auf Kosten der ersten Betriebsphase möglichst lange ausgebildet; so daß möglichst wenig Energie in den Elektromotor eingespeist wird.

In einer dritten Betriebsphase wird der Elektromotor mit einer relativ zur ersten Betriebsphase umgekehrten Polung mit der Spannungsquelle verbunden und dabei in der ersten Laufrichtung angetrieben werden. Auch in der dritten Betriebsphase wird der Spannungsquelle trotz der bestehenden Verbindung zum Elektromotor keine Leistung entnommen. In der dritten Betriebsphase werden zum Herstellen der Verbindungen zwischen dem Elektromotor und der Spannungsquelle zwei Schaltelemente durchgesteuert, die im durchgesteuerten Zustand jeweils in beide Stromrichtungen gleichermaßen einen Stromfluß zulassen. Dadurch kann die Verlustleistung im Stromkreis gering gehalten und ein hoher Wirkungsgrad erzielt werden. In einer vierten Betriebsphase kann der Elektromotor mit einer relativ zur ersten Betriebsphase umgekehrten Polung mit der Spannungsquelle verbunden werden und dadurch in einer zweiten Laufrichtung angetrieben werden, die der ersten Laufrichtung entgegengesetzt ist. Die unterschiedliche Laufrichtung, in der der Elektromotor trotz gleichartiger Ansteuerung in der dritten und vierten Betriebsphase angetrieben wird, ergibt sich dadurch, daß in diesen Betriebsphasen jeweils unterschiedliche Spannungen im Elektromotor induziert werden. In einer fünften Betriebsphase kann der Elektromotor entsprechend der zweiten Betriebsphase angesteuert werden und dadurch in der zweiten Laufrichtung angetrieben werden. In einer sechsten Betriebsphase kann der Elektromotor mit einer relativ zur dritten Betriebsphase umgekehrten Polung mit der Spannungsquelle verbunden werden und dadurch in der zweiten Laufrichtung angetrieben werden. In der dritten Betriebsphase und/oder in der sechsten Betriebsphase kann der Spannungsquelle ein vom Elektromotor generierter Ladestrom zugeführt werden. Dadurch kann der Ladezustand der Spannungsquelle verbessert werden und somit der Wirkungsgrad erhöht werden.

Die Erfindung eignet sich insbesondere zur Ansteuerung von Linearmotoren, die beispielsweise bei elektrischen Rasierapparaten oder bei elektrischen Zahnbürsten eingesetzt werden, und wird nachstehend an Hand des in der Zeichnung dargestellten Ausführungsbeispiels erläutert.

Es zeigen
- Fig. 1 bis 6: ein Ausführungsbeispiel der erfindungsgemäßen Schaltungsanordnung in jeweils unterschiedlichen Betriebszuständen und
- Fig. 7: ein Diagramm für den zeitlichen Verlauf der induzierten Spannung des Elektromotors und des insgesamt durch den Elektromotor fließenden Stroms.

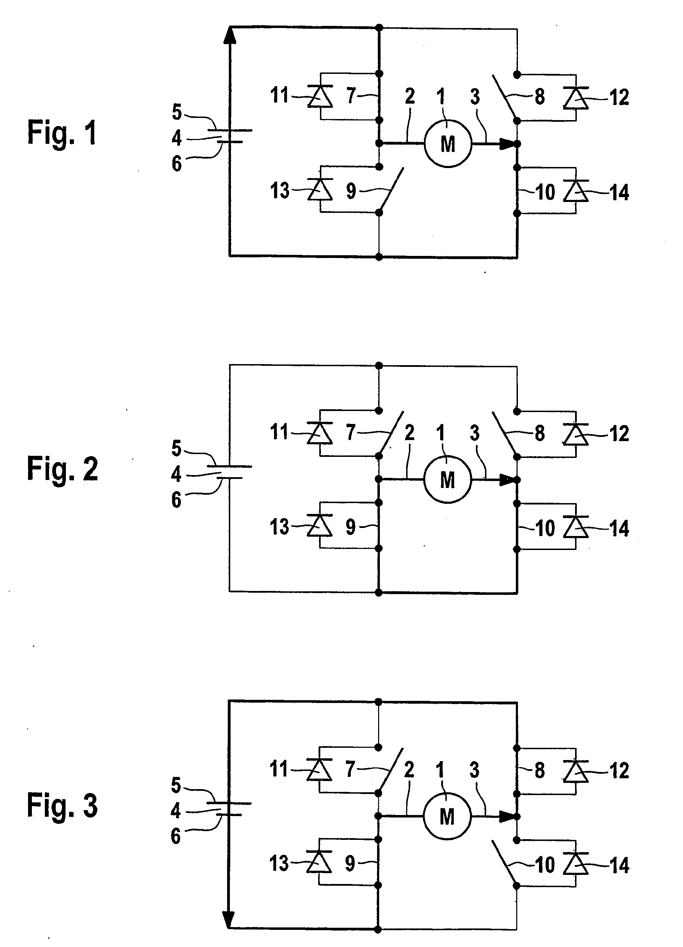

Die Fig. 1 bis 6 zeigen ein Ausführungsbeispiel der erfindungsgemäßen Schaltungsanordnung in jeweils unterschiedlichen Betriebszuständen. Ein Stromfluß ist jeweils durch eine dicke Linie mit einem Pfeil für die technische Stromrichtung dargestellt. Mit der Schaltungsanordnung wird ein Elektromotor 1 angesteuert, der über einen ersten Anschluß 2 und einen zweiten Anschluß 3 mit der Schaltungsanordnung verbunden ist. Als Spannungsversorgung für den Elektromotor 1 und für die Schaltungsanordnung dient ein Akku 4, der einen Pluspol 5 und einen Minuspol 6 aufweist. Die Schaltungsanordnung weist ein erstes Schaltelement 7, ein zweites Schaltelement 8, ein drittes Schaltelement 9 und ein viertes Schaltelement 10 auf, die in Form einer Vollbrückenschaltung angeordnet sind und denen eine erste Diode 11, eine zweite Diode 12, eine dritte Diode 13 und eine vierte Diode 14 parallel geschaltet sind. Zur Ausbildung der Vollbrückenschaltung ist das erste Schaltelement 7 zwischen dem ersten Anschluß 2 des Elektromotors 1 und dem Pluspol 5 des Akkus 4 angeordnet. Das zweite Schaltelement 8 ist zwischen dem zweiten Anschluß 3 des Elektromotors 1 und dem Pluspol 5 des Akkus 4 angeordnet. In entsprechender Weise sind zwischen dem ersten Anschluß 2 des Elektromotors 1 und dem Minuspol 6 des Akkus 4 ein drittes Schaltelement 9 sowie zwischen dem zweiten Anschluß 3 des Elektromotors 1 und dem Minuspol 6 des Akkus 4 ein viertes Schaltelement 10 angeordnet.

Die Schaltelemente 7, 8, 9 und 10 können einzeln gesteuert werden und jeweils einen durchgesteuerten und einen gesperrten Zustand annehmen. Dabei ist es von wesentlicher Bedeutung für die Erfindung, daß wenigstens zwei der Schaltelemente 7, 8, 9 und 10 im durchgesteuerten Zustand für beide Stromrichtungen gleichermaßen einen Stromfluß zulassen. Im vorliegenden Ausführungsbeispiel weisen alle vier Schaltelemente 7, 8, 9 und 10 diese Eigenschaft auf. Im gesperrten Zustand sperren die Schaltelemente 7, 8, 9 und 10 den Stromfluß gleichermaßen für beide Stromrichtungen. Der Stromfluß durch die Schaltelemente 7, 8, 9 und 10 hängt somit jeweils nicht von der Stromrichtung ab, sondern lediglich davon, ob die Schaltelemente 7, 8, 9 und 10 durchgesteuert oder gesperrt sind. Die den Schaltelementen 7, 8, 9 und 10 parallel geschalteten Dioden 11, 12, 13 und14 dienen dazu, die Schaltelemente 7, 8, 9 und 10 vor Überspannungen zu schützen und sind so gepolt, daß die Akkuspannung keinen Stromfluß durch die Dioden 11, 12, 13 und 14 hervorruft. Als Schaltelemente 7, 8, 9 und 10 eignen sich beispielsweise spezielle Typen von Feldeffekttransistoren (MOSFET) in CMOS-Technik, die sich durch das beschriebene symmetrische Stromverhalten auszeichnen. Bei einem MOSFET ist die Diode 11, 12, 13 bzw. 14 in der Regel bereits in das Gehäuse integriert. Im Rahmen der Erfindung sind die Dioden 11, 12, 13 und 14 allerdings nicht zwingend erforderlich und können beim Einsatz von Schaltelementen 7, 8, 9 und 10, die unempfindlich gegen Überspannungen sind, entfallen.

Wie im folgenden noch näher beschrieben wird, kann durch den Einsatz von Schaltelementen 7, 8, 9 und 10 mit einem symmetrischen Stromverhalten ein sehr hoher Wirkungsgrad erzielt werden. Dazu ist es allerdings erforderlich, bei der Ansteuerung des Elektromotors 1 mit der erfindungsgemäßen Schaltungsanordnung von bekannten Ansteuerverfahren für Vollbrückenschaltungen abzuweichen.

In Fig. 1 ist die Schaltungsanordnung in einem Betriebszustand dargestellt, in dem das erste Schaltelement 7 und das vierte Schaltelement 10 durchgesteuert sind, wogegen das zweite Schaltelement 8 und das dritte Schaltelement 9 gesperrt sind. Dies hat zur Folge, daß der erste Anschluß 2 des Elektromotors 1 mit dem Pluspol 5 des Akkus 4 verbunden ist und der zweite Anschluß 3 mit dem Minuspol 6. Der Stromfluß verläuft folglich vom Pluspol 5 des Akkus 4 durch das erste Schaltelement 7, durch den Elektromotor 1 und durch das vierte Schaltelement 10 zum Minuspol 6 des Akkus 4. Der Elektromotor 1 wird durch diesen von der Akkuspannung generierten Stromfluß in einer ersten Laufrichtung angetrieben. Dieser Betriebszustand wird im folgenden als erste Lastphase bezeichnet.

In Fig. 2 ist als ein weiterer Betriebszustand eine erste Kommutierungsphase dargestellt, die im Anschluß an die erste Lastphase durchlaufen wird. In der ersten Kommutierungsphase wird der Elektromotor 1 weiterhin in der ersten Laufrichtung angetrieben. Allerdings wird der hierzu erforderliche Stromfluß nicht vom Akku 4 generiert, sondern durch einen Abbau der im Elektromotor 1 gespeicherten Energie. Dadurch wird der Akku 4 geschont und somit ein längerer Betrieb mit einer Akkuladung ermöglicht. Schaltungstechnisch zeichnet sich die erste Kommutierungsphase dadurch aus, daß das erste Schaltelement 7 sowie das zweite Schaltelement 8 gesperrt und das dritte Schaltelement 9 sowie das vierte Schaltelement 10 durchgesteuert sind. Der Elektromotor 1 ist dadurch vom Akku 4 abgekoppelt und in einen geschlossenen Stromkreis eingebunden, der durch das dritte Schaltelement 9 und das vierte Schaltelement 10 ausgebildet wird. In diesem Stromkreis wird durch die im Elektromotor 1 induzierte Spannung ein Stromfluß hervorgerufen, der im Hinblick auf die für den Elektromotor 1 wirksame Stromrichtung der ersten Lastphase entspricht und somit den Elektromotor 1 weiterhin in der ersten Laufrichtung antreibt. Der Stromfluß verläuft vom zweiten Anschluß 3 des Elektromotors 1 durch das vierte Schaltelement 10 und das dritte Schaltelement 9 zum ersten Anschluß 2 des Elektromotors 1. Als nächstes nimmt die Schaltungsanordnung den Betriebszustand gemäß Fig. 3 an.

Der in Fig. 3 dargestellte Betriebszustand wird als erste Löschphase bezeichnet und dient dazu, im Hinblick auf eine bevorstehende Umpolung des Elektromotors 1 die im Elektromotor 1 gespeicherte Energie schneller als in der Kommutierungsphase abzubauen, und zwar durch Einspeisung in den Akku 4. Hierzu werden das zweite Schaltelement 8 und das dritte Schaltelement 9 durchgesteuert und das erste Schaltelement 7 und das vierte Schaltelement 10 gesperrt, so daß sich ein Stromfluß vom zweiten Anschluß 3 des Elektromotors 1, durch das zweite Schaltelement 8, den Akku 4 und das dritte Schaltelement 9 zum ersten Anschluß 2 des Elektromotors 1 ergibt, der durch die im Elektromotor 1 induzierte Spannung hervorgerufen wird. Dieser Stromfluß führt dazu, daß der Akku 4 aufgeladen wird. Gleichzeitig wird der Elektromotor 1 weiterhin in der ersten Laufrichtung angetrieben.

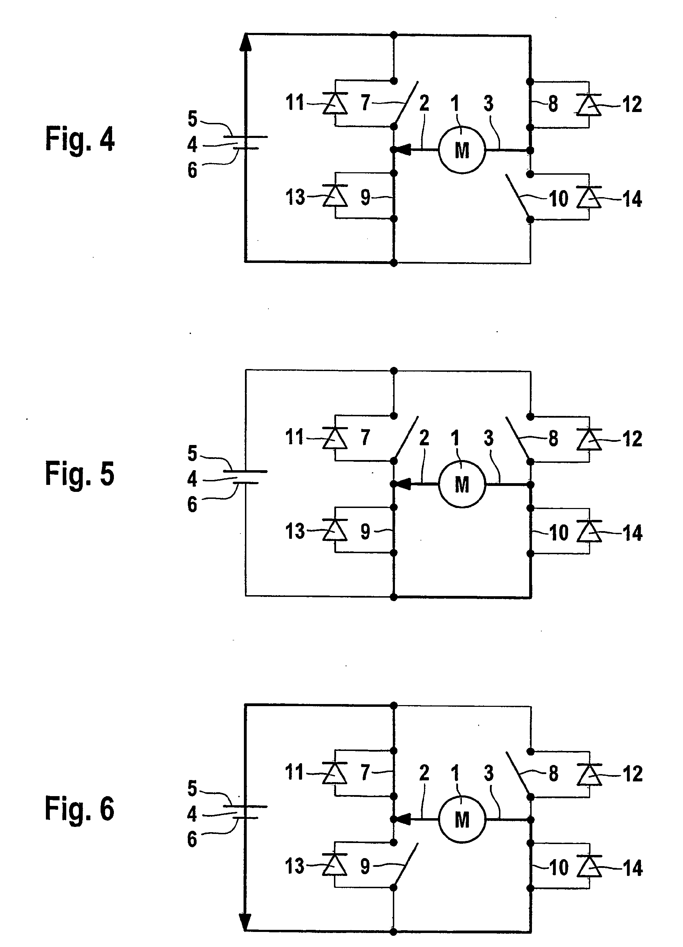

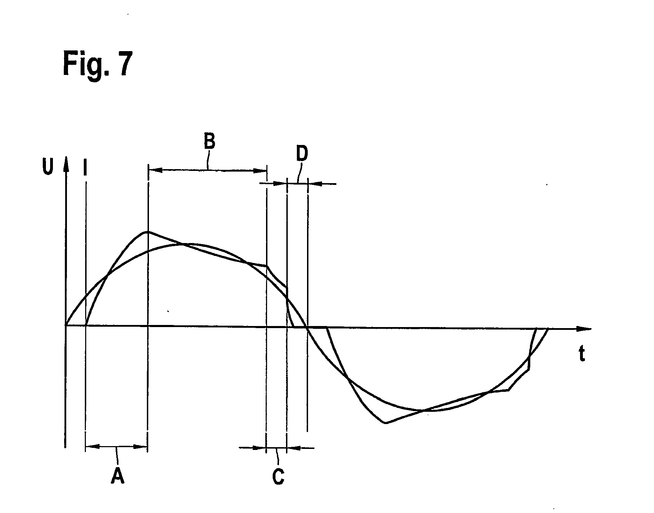

An die erste Löschphase schließt sich die in Fig. 4 dargestellte zweite Lastphase an, die sich von der ersten Lastphase der Fig. 1 dadurch unterscheidet, daß der Elektromotor 1 in einer zur ersten Laufrichtung entgegengesetzten zweiten Laufrichtung angetrieben wird. Dies wird dadurch erreicht, daß der Elektromotor 1 verglichen mit der ersten Lastphase in umgekehrter Weise mit dem Akku 4 verbunden wird, d. h. der erste Anschluß 2 des Elektromotors 1 wird mit dem Minuspol 6 des Akkus 4 verbunden und der zweite Anschluß 3 mit dem Pluspol 5. Hierzu werden das zweite Schaltelement 8 sowie das dritte Schaltelement 9 durchgesteuert und das erste Schaltelement 7 sowie das vierte Schaltelement 10 gesperrt. Der damit erreichte Schaltzustand entspricht der ersten Löschphase, so daß ausgehend von der ersten Löschphase theoretisch keine Schaltvorgänge erforderlich sind. Wie im folgenden noch näher erläutert wird, schließt die zweite Lastphase allerdings zeitlich nicht unmittelbar an die erste Löschphase an, sondern es werden für einen kurzen Zeitraum alle Schaltelemente 7, 8, 9 und 10 gesperrt und erst dann wird zur zweiten Lastphase übergegangen. Dies entspricht in Fig. 7 der schnelleren Löschphase D. Während der zweiten Lastphase ist die Stromrichtung zur Stromrichtung während der ersten Löschphase entgegengesetzt. Dies rührt daher, daß die im Elektromotor 1 gespeicherte Energie abgebaut ist und der Stromfluß durch die Akkuspannung zustande kommt und folglich eine der Polarität der Akkuspannung entsprechende Richtung aufweist.

Fig. 5 zeigt eine zweite Kommutierungsphase, die bezüglich des Schaltzustands der ersten Kommutierungsphase der Fig. 2 vollständig entspricht und unmittelbar auf die zweite Lastphase folgt. Der Stromfluß verläuft allerdings in entgegengesetzter Richtung, da die im Elektromotor 1 induzierte Spannung ebenfalls eine entgegengesetzte Polung aufweist. Während der zweiten Kommutierungsphase wird der Elektromotor 1 somit mittels der induzierten Spannung in der zweiten Laufrichtung angetrieben.

Auf die zweite Kommutierungsphase folgt die in Fig. 6 dargestellte zweite Löschphase, bei der das erste Schaltelement 7 sowie das vierte Schaltelement 10 durchgesteuert sind und das zweite Schaltelement 8 und das dritte Schaltelement 9 gesperrt sind. Analog zur ersten Löschphase gemäß Fig. 3 wird auch in der zweiten Löschphase durch die im Elektromotor 1 induzierte Spannung ein Ladestrom im Akku 4 generiert, wobei der Stromkreis allerdings wegen der relativ zur ersten Löschphase entgegengesetzten Polung der induzierten Spannung diesmal über das erste Schaltelement 7 und das vierte Schaltelement 10 geschlossen wird. Durch diese Maßnahme wird verglichen mit der ersten Löschphase eine Umpolung zwischen dem Elektromotor 1 und dem Akku 4 erreicht, so daß am Akku 4 der ersten Löschphase entsprechende Verhältnisse hergestellt werden. Nach der zweiten Löschphase beginnt der beschriebene Ablauf mit der in Fig. 1 dargestellten ersten Lastphase von neuem.

Fig. 7 zeigt ein Diagramm für den zeitlichen Verlauf der induzierten Spannung U des Elektromotors 1 und des insgesamt durch den Elektromotor 1 fließenden Stroms I. Auf der Abszisse ist die Zeit t aufgetragen und auf der Ordinate die im Elektromotor 1 induzierte Spannung U und der durch den Elektromotor 1 fließende Strom I. Der dargestellte Zeitbereich deckt einen Durchlauf durch die vorstehend beschriebenen sechs Betriebsphasen von der ersten Lastphase bis zur zweiten Löschphase ab, wobei exemplarisch die ersten drei Betriebsphasen in das Diagramm eingezeichnet sind. Die zweiten drei Betriebsphasen stellen jeweils eine Wiederholung mit umgekehrtem Vorzeichen dar und wurden deshalb nicht eigens eingezeichnet. Die induzierte Spannung U folgt einem sinusförmigen Verlauf, wobei während des dargestellten Zeitbereichs eine vollständige Periode durchlaufen wird. Entsprechend führt der beispielsweise als oszillierender Linearmotor ausgebildete Elektromotor 1 in diesem Zeitbereich eine vollständige Schwingung aus. Der Strom I nimmt während der in Fig. 7 mit dem Buchstaben A bezeichneten ersten Lastphase wegen des zugeschalteten Akkus 4 stark zu. In der in Fig. 7 mit dem Buchstaben B bezeichneten ersten Kommutierungsphase nimmt der Strom I langsam ab, da der Akku 4 vom Elektromotor 1 abgekoppelt ist und der Stromfluß somit lediglich durch die induzierte Spannung U aufrecht erhalten wird. Trotz des sinkenden Stroms I ist es möglich, den Elektromotor 1 über einen relativ langen Zeitraum, der im vorliegenden Ausführungsbeispiel sogar länger ist als die erste Lastphase, ohne Akku 4 zu betreiben. An die erste Kommutierungsphase schließt sich die erste Löschphase an, die in Fig. 7 mit dem Buchstaben C bezeichnet ist. In der ersten Löschphase nimmt der Strom I trotz zugeschalteten Akku 4 relativ schnell ab. Dies ist darin begründet, daß der Akku 4 mit Hilfe der induzierten Spannung U aufgeladen wird, so daß ein Stromfluß entgegen der durch die Polarität des Akkus 4 vorgegebenen Richtung zustande kommt, solange eine ausreichend hohe induzierte Spannung U zur Verfügung steht. Nach der ersten Löschphase werden sämtliche Schaltelemente 7, 8, 9 und 10 geöffnet, so daß der Strom I sehr schnell auf Null zurückgeht. Nach kurzer Zeit folgt die zweite Lastphase, die sich im Hinblick auf die Verläufe der induzierten Spannung U und des Stromes I lediglich bezüglich des Vorzeichens von den für die erste Lastphase beschriebenen Verläufen unterscheidet. Entsprechendes gilt auch für die zweite Kommutierungsphase und die zweite Löschphase.

## Patentansprüche

1. Elektrisches Kleingerät, insbesondere elektrischer Rasierer oder elektrische Zahnbürste, mit einem oszillierenden Elektromotor (1) und einer als Akku oder als Batterie ausgebildeten Spannungsquelle (4) und einer Schaltungsanordnung zur Ansteuerung des oszillierenden Elektromotors (1), wobei die Schaltungsanordnung vier Schaltelemente (7, 8, 9, 10) aufweist, die jeweils in einem durchgesteuerten Zustand einen Stromfluss zulassen und in einem gesperrten Zustand den Stromfluss sperren, wobei und wobei jedem Schaltelement (7, 8, 9, 10) eine Diode (11, 12, 13, 14) parallel geschaltet ist, wobei die Dioden (11, 12, 13, 14) bezüglich der Spannungsquelle (4) jeweils in Sperrichtung angeordnet sind,, wobei die Schaltelemente (7, 8, 9, 10) in einer Vollbrückenschaltung angeordnet sind, gemäß der je ein Schaltelement (7, 8, 9, 10) zwischen einem ersten Pol (5) der Spannungsquelle (4) und einem ersten Anschluss (2) des Elektromotors (1), zwischen dem ersten Pol (5) der Spannungsquelle (4) und einem zweiten Anschluss (3) des Elektromotors (1), zwischen einem zweiten Pol (6) der Spannungsquelle (4) und dem ersten Anschluss (2) des Elektromotors (1) sowie zwischen dem zweiten Pol (6) der Spannungsquelle (4) und dem zweiten Anschluss (3) des Elektromotors (1) geschaltet sind und wobei alle vier Schaltelemente (7, 8, 9, 10) im durchgeschalteten Zustand für beide Stromrichtungen gleichermaßen einen Stromfluss zulassen, wobei weiterhin die Schaltungsanordnung dazu vorgesehen ist, den Elektromotor (1) in einer ersten Betriebsphase mit der Spannungsquelle (4) zu verbinden und dadurch in einer ersten Laufrichtung anzutreiben, den Elektromotor (1) in einer zweiten Betriebsphase von der Spannungsquelle (4) abzuklemmen und in der zweiten Betriebsphase zwei Schaltelemente (9, 10) durchzusteuern, von denen wenigstens eines im durchgesteuerten Zustand in beide Stromrichtungen gleichermaßen einen Stromfluss zulässt, und dadurch Anschlüsse (2, 3) des Elektromotors (1), die in der ersten Betriebsphase mit der Spannungsquelle (4) verbunden waren, miteinander verbunden werden, so dass der Elektromotor (1) in der ersten Laufrichtung angetrieben wird, den Elektromotor (1) in einer dritten Betriebsphase mit einer relativ zur ersten Betriebsphase umgekehrten Polung mit der Spannungsquelle (4) zu verbinden und dabei in der ersten Laufrichtung anzutreiben und zum Herstellen des Verbindungen zwischen dem Elektromotor (1) und der Spannungsquelle (4) zwei Shaltelemente durch zusteuern, die im durchgestueusten zustand jeweils in beide Stromrichtungen gleichesmaβen einen Stromfluss zulanen, und nach der dritten Betriebsphase sämtliche Schaltelemente für einen kurzen Zeitraum (D) zu Öffnen, sodan des Strom sehr Schnell auf Null zurückgeht. und nach der dritten Betriebsphase sämtliche Schaltelemente für einen Kurzeu Zeitraum (D) zu öffnen, sodan des Strom sehr Schnell auf Null zurückgeht.

2. Elektrisches Kleingerät nach einem der vorhergehenden Ansprüche, **dadurch gekennzeichnet, dass** die Schaltelemente (7, 8, 9, 10) jeweils als Feldeffekttransistoren ausgebildet sind.

3. Verfahren zum Ansteuern eines oszillierenden Elektromotors (1) eines elektrischen Kleingeräts, das mit einer als Akku oder als Batterie ausgebildeten Spannungsquelle (4) betrieben wird, bei welchem der Elektromotor fortlaufend die Laufrichtung umkehrt, wobei
- der Elektromotor (1) in einer Vollbrückenschaltung angeordnet wird und jedem Schaltelement (7, 8, 9, 10) eine Diode (11, 12, 13, 14) parallel geschaltet ist, wobei die Dioden (11, 12, 13, 14) bezüglich der Spannungsquelle (4) jeweils in Sperrrichtung angeordnet sind wobei die Vollbrückenschaltung vier Schaltelemente (7, 8, 9, 10) aufweist, und wobei jedem Schaltelement (7, 8, 9, 10) eine Diode (11, 12, 13, 14) parallel geschaltet ist, wobei die Dioden (11, 12, 13, 14) bezüglich der Spannungsquelle (4) jeweils in Sperrichtung angeordnet sind Schaltelement (7, 8, 9, 10) zwischen einem ersten Pol (5) der Spannungsquelle (4) und einem ersten Anschluss (2) des Elektromotors (1), zwischen dem ersten Pol (5) der Spannungsquelle (4) und einem zweiten Anschluss (3) des Elektromotors (1), zwischen einem zweiten Pol (6) der Spannungsquelle (4) und dem ersten Anschluss (2) des Elektromotors (1) sowie zwischen dem zweiten Pol (6) der Spannungsquelle (4) und dem zweiten Anschluss (3) des Elektromotors (1) geschaltet ist und wobei alle vier Schaltelemente (7, 8, 9, 10) im durchgeschalteten Zustand für beide Stromrichtungen gleichermaßen einen Stromfluss zulassen,
- der Elektromotor (1) in einer ersten Betriebsphase mit der Spannungsquelle (4) verbunden wird und dadurch in einer ersten Laufrichtung angetrieben wird,
- der Elektromotor (1) in einer zweiten Betriebsphase von der Spannungsquelle (4) abgeklemmt wird,
- in der zweiten Betriebsphase zwei Schaltelemente (9, 10) durchgesteuert werden, von denen wenigstens eines im durchgesteuerten Zustand in beide Stromrichtungen gleichermaßen einen Stromfluss zulässt, und dadurch Anschlüsse (2, 3) des Elektromotors (1), die in der ersten Betriebsphase mit der Spannungsquelle (4) verbunden waren, miteinander verbunden werden, so dass der Elektromotor (1) in der ersten Laufrichtung angetrieben wird,
- der Elektromotor (1) in einer dritten Betriebsphase mit einer relativ zur ersten Betriebsphase umgekehrten Polung mit der Spannungsquelle (4) verbunden wird und dabei in der ersten Laufrichtung angetrieben wird,
- wobei in der dritten Betriebsphase zum Herstellen der Verbindungen zwischen dem Elektromotor (1) und der Spannungsquelle (4) zwei Schaltelemente (8, 9) durchgesteuert werden, die im durchgesteuerten Zustand jeweils in beide Stromrichtungen gleichermaßen einen Stromfluss zulassen, und
- nach der dritten Betriebsphase sämtliche Shaltelemente Für einen kurzeu Zeitraum (D) geöffnet werden, sodan der Strom sehr schnell auf Null zurückgeht.

4. Verfahren nach Anspruch 3, **dadurch gekennzeichnet, dass** der Elektromotor (1) in einer vierten Betriebsphase mit einer relativ zur ersten Betriebsphase umgekehrten Polung mit der Spannungsquelle (4) verbunden wird und dadurch in einer zweiten Laufrichtung angetrieben wird, die der ersten Laufrichtung entgegengesetzt ist.

5. Verfahren nach einem der Ansprüche 3 bis 4, **dadurch gekennzeichnet, dass** der Elektromotor (1) in einer fünften Betriebsphase entsprechend der zweiten Betriebsphase angesteuert wird und dadurch in der zweiten Laufrichtung angetrieben wird.

6. Verfahren nach einem der Ansprüche 3 bis 5, **dadurch gekennzeichnet, dass** der Elektromotor (1) in einer sechsten Betriebsphase mit einer relativ zur dritten Betriebsphase umgekehrten Polung mit der Spannungsquelle (4) verbunden wird und dadurch in der zweiten Laufrichtung angetrieben wird.

7. Verfahren nach einem der Ansprüche 3 bis 6, **dadurch gekennzeichnet, dass** der Spannungsquelle (4) in der dritten Betriebsphase und/oder in der sechsten Betriebsphase ein vom Elektromotor (1) generierter Ladestrom zugeführt wird.

## Claims

1. A small electrical appliance, in particular an electric shaver or an electric toothbrush, having an oscillating electric motor (1) and a voltage source (4) designed as a rechargeable battery or as a disposable battery, and having a circuit arrangement to control the oscillating electric motor (1), wherein the circuit arrangement has four switching elements (7, 8, 9, 10) that respectively allow a current flow in a driven state and block the current flow in a deactivated state; wherein a diode (11, 12, 13, 14) is connected in parallel with each switching element (7, 8, 9, 10); wherein the diodes (11, 12, 13, 14) are respectively arranged in the blocking direction relative to the voltage source (4); wherein the switching elements (7, 8, 9, 10) are arranged in a full bridge circuit according to which a respective switching element (7, 8, 9, 10) is connected between a first pole (5) of the voltage source (4) and a first terminal (2) of the electric motor (1), between the first pole (5) of the voltage source (4) and a second terminal (3) of the electric motor (1), between a second pole (6) of the voltage source (4) and the first terminal (2) of the electric motor (1), and between the second pole (6) of the voltage source (4) and the second terminal (3) of the electric motor (1), and wherein all four switching elements (7, 8, 9, 10) allow a current flow in equal measure for both current directions in the driven state; wherein the circuit arrangement is provided to connect the electric motor (1) with the voltage source (4) in a first operating phase and to thereby drive it in a first running direction, to disconnect the electric motor (1) from the voltage source (4) in a second operating phase, and to drive two switching elements (9, 10) in the second operating phase -- of which at least one allows a current flow in equal measure in both current directions in the driven state -- and so that terminals (2, 3) of the electric motor (1) that were connected with the voltage source (4) in the first operating phase are thereby connected with one another so that the electric motor (1) is driven in the first running direction, and in a third operating phase, to connect the electric motor (1) with the voltage source (4) with a polarity that is reversed relative to the first operating phase and to drive the electric motor (1) in the first running direction, and to drive two switching elements to establish connections between the electric motor (1) and the voltage source (4), which two switching elements respectively allow a current flow in equal measure in both directions in the driven state, and to open all switching elements for a short period of time (D) after the third operating phase so that the current very rapidly returns to zero.

2. The small electrical appliance according to the preceding Claim, **characterized in that** the switching elements (7, 8, 9, 10) are respectively formed as field effect transistors.

3. A method to control an oscillating electric motor (1) of a small electrical appliance that is operated with a voltage source (4) designed as a rechargeable battery or as a disposable battery, in which the electric motor continuously reverses the running direction, wherein
- the electric motor (1) is arranged in a full bridge circuit; wherein the full bridge circuit has four switching elements (7, 8, 9, 10) and a diode (11, 12, 13, 14) is connected in parallel with each switching element (7, 8, 9, 10); wherein the diodes (11, 12, 13, 14) are respectively arranged in the blocking direction relative to the voltage source (4); wherein a respective switching element (7, 8, 9, 10) is connected between a first pole (5) of the voltage source (4) and a first terminal (2) of the electric motor (1), between the first pole (5) of the voltage source (4) and a second terminal (3) of the electric motor (1), between a second pole (6) of the voltage source (4) and the first terminal (2) of the electric motor (1), and between the second pole (6) of the voltage source (4) and the second terminal (3) of the electric motor (1); and wherein all four switching elements (7, 8, 9, 10) allow a current flow in equal measure for both current directions in the driven state;
- the electric motor (1) is connected with the voltage source (4) in a first operating phase and is thereby driven in a first running direction;
- the electric motor (1) is disconnected from the voltage source (4) in a second operating phase;
- two switching elements (9, 10) are driven in the second operating phase, of which at least one allows a current flow in equal measure in both current directions in the driven state, and terminals (2, 3) of the electric motor (1) that were connected with the voltage source (4) in the first operating phase are thereby connected with one another so that the electric motor (1) is driven in the first running direction;
- in a third operating phase the electric motor (1) is connected with the voltage source (4) with a polarity that is reversed relative to the first operating phase and is driven in the first running direction;
- wherein, in the third operating phase, two switching elements (8, 9) that respectively allow a current flow in equal measure in both current directions in the driven state are driven to establish the connections between the electric motor (1) and the voltage source (4), and after the third operating phase all switching elements are opened for a short period of time (D) so that the current very quickly returns to zero.

4. The method according to Claim 3, **characterized in that** in a fourth operating phase the electric motor (1) is connected with the voltage source (4) with a polarity that is reversed relative to the first operating phase and is thereby driven in a second running direction that is counter to the first running direction.

5. The method according to any of the Claims 3 through 4, **characterized in that** in a fifth operating phase the electric motor (1) is controlled corresponding to the second operating phase and is thereby driven in the second running direction.

6. The method according to any of the Claims 3 through 5, **characterized in that** in a sixth operating phase the electric motor (1) is connected with the voltage source (4) with a polarity that is reversed relative to the third operating phase and is thereby driven in the second running direction.

7. The method according to any of the Claims 3 through 6, **characterized in that** in the third operating phase and/or in the sixth operating phase a charging current generated by the electric motor (1) is supplied to the voltage source (4).

## Revendications

1. Petit appareil électrique, en particulier un rasoir électrique ou une brosse à dents électrique, avec un moteur électrique oscillant (1) et une source de tension (4) conçue comme un accumulateur ou comme une pile, et avec un montage électrique pour l'actionnement du moteur électrique oscillant (1), dans lequel le montage électrique comporte quatre éléments de commutation (7, 8, 9, 10) permettant chacun le passage du courant, dans un état activé, et bloquant le passage du courant dans un état verrouillé, dans lequel une diode (11, 12, 13, 14) est reliée en parallèle à chaque élément de commutation (7, 8, 9, 10), les diodes (11, 12, 13, 14) étant montées respectivement dans le sens de verrouillage par rapport à la source de tension (4), où les éléments de commutation (7, 8, 9, 10) sont agencés selon un montage en pont intégral, dans lequel un élément de commutation (7, 8, 9, 10) est monté respectivement entre un premier pôle (5) de la source de tension (4) et un premier raccordement (2) du moteur électrique (1), entre le premier pôle (5) de la source de tension (4) et un deuxième raccordement (3) du moteur électrique (1), entre un deuxième pôle (6) de la source de tension (4) et le premier raccordement (2) du moteur électrique (1), et entre le deuxième pôle (6) de la source de tension et le deuxième raccordement (3) du moteur électrique (1), et dans lequel, dans l'état activé, les quatre éléments de commutation (7, 8, 9, 10) permettent tous de la même façon le passage du courant dans les deux directions de passage, et dans lequel le montage électrique est en outre prévu pour relier le moteur électrique (1) à la source de tension (4) dans une première phase de fonctionnement, et ainsi l'actionner dans une première direction de marche, pour déconnecter le moteur électrique (1) de la source de tension (4) dans une deuxième phase de fonctionnement, et d'activer deux éléments de commutation (9, 10) dans la deuxième phase de fonctionnement, parmi lesquels au moins l'un permet, dans l'état activé, le passage du courant de la même façon dans les deux directions de passage, reliant ainsi entre eux les raccordements (2, 3) du moteur électrique (1) qui dans la première phase de fonctionnement étaient reliés à la source de tension (4), de manière à actionner le moteur électrique (1) dans la première direction de marche, pour relier le moteur électrique (1) à la source de tension (4) avec une polarité inverse par rapport à celle de la première phase de fonctionnement, au cours d'une troisième phase de fonctionnement, tout en l'actionnant ainsi dans la première direction de marche, et pour activer deux éléments de commutation permettant le passage du courant de la même façon dans les deux directions de passage à l'état activé, afin d'établir les connexions entre le moteur électrique (1) et la source de tension (4), et pour ouvrir tous les éléments de commutation pendant un court instant (D) après la troisième phase de fonctionnement, de sorte que le courant revient très rapidement à zéro.

2. Petit appareil électrique selon la revendication précédente, caractérisé en ce queles éléments de commutation (7, 8, 9, 10) sont conçus comme des transistors à effet de champ.

3. Procédé pour l'actionnement d'un moteur électrique (1) oscillant d'un petit appareil électrique fonctionnant avec une source de tension (4) conçue comme un accumulateur ou une pile, dans lequel le moteur électrique inverse continuellement la direction de marche, dans lequel
- le moteur électrique (1) est agencé selon un montage en pont intégral, le montage en pont intégral comportant quatre éléments de commutation (7, 8, 9, 10), et dans lequel une diode (11, 12, 13, 14) est reliée en parallèle à chaque élément de commutation (7, 8, 9, 10), les diodes (11, 12, 13, 14) étant montées respectivement dans le sens de verrouillage par rapport à la source de tension (4), dans lequel un élément de commutation (7, 8, 9, 10) est monté respectivement entre un premier pôle (5) de la source de tension (4) et un premier raccordement (2) du moteur électrique (1), entre le premier pôle (5) de la source de tension (4) et un deuxième raccordement (3) du moteur électrique (1), entre un deuxième pôle (6) de la source de tension (4) et le premier raccordement (2) du moteur électrique (1), et entre le deuxième pôle (6) et le deuxième raccordement (3) du moteur électrique (1), et dans lequel, dans l'état activé, les quatre éléments de commutation (7, 8, 9, 10) permettent tous de la même façon le passage du courant dans les deux directions de passage,
- le moteur électrique (1) est relié à la source de tension (4) dans une première phase de fonctionnement, et ainsi actionné dans une première direction de marche,
- le moteur électrique (1) est déconnecté de la source de tension (4) dans une deuxième phase de fonctionnement,
- deux éléments de commutation (9, 10) sont activés dans la deuxième phase de fonctionnement, parmi lesquels au moins l'un permet, dans l'état activé, le passage du courant de la même façon dans les deux directions de passage, reliant ainsi entre eux les raccordements (2, 3) du moteur électrique (1) qui dans la première phase de fonctionnement étaient reliés à la source de tension (4), de manière à actionner le moteur électrique (1) dans la première direction de marche,
- au cours d'une troisième phase de fonctionnement, le moteur électrique (1) est relié à la source de tension (4) avec une polarité inverse par rapport à celle de la première phase de fonctionnement, tout en l'actionnant ainsi dans la première direction de marche,
- dans la troisième phase de fonctionnement, deux éléments de commutation (8, 9), qui à l'état activé permettent respectivement le passage du courant, de la même façon dans les deux directions de passage, sont activés pour réaliser une connexion entre le moteur électrique (1) et la source de tension (4), et tous les éléments de commutation sont ouverts pendant un court instant (D) après la troisième phase de fonctionnement, de sorte que le courant revient très rapidement à zéro.

4. Procédé selon la revendication 3, **caractérisé en ce que**, dans une quatrième phase de fonctionnement, le moteur électrique (1) est relié à la source de tension (4) avec une polarité inverse par rapport à celle de la première phase de fonctionnement, et ainsi actionné dans une deuxième direction de marche opposée à la première direction de marche.

5. Procédé selon l'une des revendications 3 à 4, **caractérisé en ce que**, dans une cinquième phase de fonctionnement, le moteur électrique (1) est activé comme dans la deuxième phase de fonctionnement, et fonctionne donc dans la deuxième direction de marche.

6. Procédé selon l'une des revendications 3 à 5, **caractérisé en ce que**, dans une sixième phase de fonctionnement, le moteur électrique (1) est relié à la source de tension (4) avec une polarité inverse par rapport à celle de la troisième phase de fonctionnement, et ainsi actionné dans la deuxième direction de marche.

7. Procédé selon l'une des revendications 3 à 6, **caractérisé en ce que**, dans la troisième phase de fonctionnement et/ou dans la sixième phase de fonctionnement, un courant de charge généré par le moteur électrique (1) est fourni à la source de tension (4).
